# EUROPÄISCHE PATENTANMELDUNG

(11) **EP 1 182 367 A2**
(43) Veröffentlichungstag der Anmeldung: **27.02.2002**
(21) Anmeldenummer: 01118403.3
(22) Anmeldetag: 31.07.2001
(51) Int. Cl.: F16B 35/06, F16B 25/10, F16B 23/00

(54) **Schraube zur Befestigung von Platten und dergleichen**

(30) Priorität: 26.08.2000 DE 20014788 U
(71) Anmelder: Rathscheck Schiefer und Dach-Systeme KG, 56707 Mayen-Katzenberg (DE)
(72) Erfinder: Rummel, Frank, 56170 Bendorf / Rhein (DE); Hoppen, Ewald A., 53562 Sankt Katharinen-Strödt (DE)
(74) Vertreter: Althaus, Arndt, Dipl.-Ing.

(57) **Zusammenfassung**

Die Erfindung betrifft einen Schraubstift 10 insbesondere zur Befestigung von Dach- oder Fassadenplatten aus Schiefer, Naturstein, Faserzement und an einer Deckunterlage oder Schalung, wobei der Schraubstift 10 einen Schaft 2 aufweist, dessen eines Ende als Schaftspitze 1 ausgebildet ist, dessen anderes Ende mit einem Kopf 4 versehen ist und der in einem sich an die Schaftspitze 1 anschließenden Abschnitt mit einer Schraubwendel 5 versehen ist. Erfindungsgemäß ist der Schraubstift 10 als Senkkopfschraube ausgebildet ist und auf der kegeligen oder konischen Senkkopfoberfläche 3' ist wenigstens ein sich vom Schaft 2 nach außen erstreckender schneidenartiger Vorsprung oder eine Schneide 7 ausgebildet. Mit dem oder den auf der Senkkopfoberfläche 3' ausgebildeten schneidenartigen Vorsprüngen oder Schneiden 7 kann sich der Senkkopf beim Einschrauben in die im wesentlichen trichterförmige Aushöhlung des Befestigungsloches in der Schieferplatte einschneiden bzw. einsenken, so daß der Schraubstift optimale Anlage und Halt in dem Befestigungsloch findet. Überschüssiges oder überstehendes Schiefermaterial wird mit den Schneiden abgeschert oder zermahlen.

## Beschreibung

Die Erfindung betrifft einen Schraubstift insbesondere zur Befestigung von Dach- oder Fassadenplatten aus Schiefer, Naturstein, Faserzement und dgl. an einer Deckunterlage, Schalung, Unterkonstruktion aus Holz und/oder einem Mauerwerk, wobei der Schraubstift einen Schaft aufweist, dessen eines Ende als Schaftspitze ausgebildet ist, dessen anderes Ende mit einem Kopf versehen ist und der in einem sich an die Schaftspitze anschließenden Abschnitt mit einer Schraubwendel versehen ist.

Befestigungsmittel zur Befestigung von Schieferplatten und dgl. werden im Stand der Technik entweder als Schiefernägel oder Schieferstifte bezeichnet und mit einem Schieferhammer manuell durch die in Schieferplatten vorgesehenen Befestigungslöcher hindurch entweder in die von einer Holzkonstruktion gebildete Deckunterlage bzw. Schalung oder unmittelbar in ein Mauerwerk eingeschlagen. Ein Schiefernagel hat einen Schaft, der sich kontinuierlich vom Kopf bis zur Nagelspitze hin konisch verjüngt. Schieferstifte weisen einen kreiszylindrischen Schaft konstanten Durchmessers auf. Die klassischen Schiefernägel und -stifte bestehen aus Kupfer oder nicht-rostendem Stahl. Verwendet werden insbesondere geschlagene bzw. geschmiedete Schiefernägel, Edelstahlschieferschraubstifte oder Kupferstifte mit aufgerauhtem Schaft. Kupfer- und/oder Stahlschiefernägel und -stifte erhalten vorzugsweise eine Feuerverzinkung mit einer Zinkauflage von mindestens 50 µm.

Nach den "Fachregeln für Dachdeckungen mit Schiefer" und den "Fachregeln für Außenwandbekleidungen mit Schiefer", Ausgabe 9/99, muß die Länge eines Schieferplatten-Befestigungsmittels mindestens 32 mm betragen und der Kopf sollte einen Mindestdurchmesser von 10 mm aufweisen. Insbesondere bei Schiefernägeln und -stiften mit geschlagenem oder geschmiedetem Kopf ist dieser aufgrund fertigungstechnischer Ungenauigkeiten ellipsenförmig mit einem Kopfdurchmesser von etwa 8 mm bis 8,5 mm. Trotz der Sollanforderungen der Fachregeln wird ein entsprechender Kopfdurchmesser als ausreichend angesehen.

Aus dem Stand der Technik sind eine Vielzahl von Schrauben und Schraubstiften einschließlich Senkkopfschrauben bekannt. Bei der Schieferplatten-Dacheindeckung wurden allerdings bisher Schrauben und motorbetriebene Schraubgeräte nicht verwendet. Ursache hierfür war möglicherweise, daß es bei der Schieferplatten-Dach- und Fassadeneindeckung zwingend erforderlich ist, das in der Schieferplatte bereits vorhandene Befestigungsloch mit Befestigungsmitteln, die eine Mindestlänge von 32 mm aufweisen, zielgenau zu treffen. In der nicht vorveröffentlichten älteren Gebrauchsmusteranmeldung DE 200 02 032.3 der Anmelderin wird ein als Schraube bzw. Schraubstift ausgebildetes Schieferplatten-Befestigungsmittel vorgeschlagen, das mit einem motorbetriebenen Schraubgerät verarbeitbar ist.

Aufgabe der Erfindung ist es, einen Schraubstift bzw. ein Schieferplatten-Befestigungsmittel zu schaffen, der bzw. das unter Berücksichtigung der Fachregeln für die Dacheindeckung eine schnelle Dach- und Fassadeneindeckung ermöglicht und auch in von Hand zugerichteten Befestigungslöchern in den Dach- und Fassadenplatten optimal eingreift.

Diese Aufgabe wird erfindungsgemäß dadurch gelöst, daß der Schraubstift als Senkkopfschraube ausgebildet ist und an der kegeligen bzw. konischen Senkkopfoberfläche wenigstens ein sich vom Schaft nach außen erstreckender schneidenartiger Vorsprung bzw. eine Schneide ausgebildet ist.

Die besondere Eignung als Schieferplatten-Befestigungsmittel wird - wie in der älteren Anmeldung DE 200 02 032.3 bereits beschrieben - u.a. durch die Ausbildung als Senkkopfschraube erreicht. Durch den erweiterten Schaftbereich ggf. unmittelbar vor dem Rundkopf wird erzielt, daß der Schraubstift mit seinem schlankeren, längeren Schaft durch das in der Schieferplatte befindliche Befestigungsloch durchtreten kann und erst zum Ende des Einschraubvorgangs hin mit dem breiteren Schaftbereich das in der Schieferplatte befindliche Befestigungsloch zentrierend ausfüllt. Der Senkkopf mit dem sich zum Kopf hin erweiternden Schaftbereich ist besser als die bisher verwendeten Schiefernägel- und stifte an die Geometrie des Befestigungsloch angepaßt. Mit dem oder den auf der Senkkopfoberfläche ausgebildeten schneidenartigen Vorsprüngen oder Schneiden kann sich der Senkkopf erfindungsgemäß beim Einschrauben in die im wesentlichen trichterförmige Aushöhlung des Befestigungsloches einschneiden bzw. einsenken, so daß der Schraubstift optimale Anlage und Halt in dem Befestigungsloch findet. Überschüssiges oder überstehendes Schiefermaterial wird mit den Schneiden abgeschert oder zermahlen. Hierbei werden Unregelmäßigkeiten im manuell oder maschinell zugerichteten Befestigungsloch ausgeglichen, so daß der erfindungsgemäße Schraubstift immer so tief wie gewünscht in der Schieferplatte versenkt werden kann. Der mit den Schneiden bewirkte Selbsteinsenkeffekt kann sich auch bei anderen Verwendungen des Schraubstiftes, insbesondere auch beim Verschrauben von weichen Materialien wie Holz mit Schalungen, Latten und dgl. vorteilhaft auswirken. Die Befestigung von Schieferplatten mit der erfindungsgemäßen Schieferschraube ist jedoch das bevorzugte und bei der Beschreibung berücksichtigte Anwendungsgebiet.

Der erfindungsgemäße Schraubstift weist vorzugsweise mehrere, insbesondere drei bis fünf schneidenartige Vorsprünge bzw. Schneiden rotationssymmetrisch um die Schraubenachse verteilt auf der Senkkopfoberfläche auf. Durch die symmetrische Anordnung der schneidenartigen Vorsprünge werden einerseits die auf die einzelnen Vorsprünge bzw. Schneiden einwirkenden Kräfte reduziert, andererseits symmetrisch im Befestigungsloch verteilt, so daß die einzelnen Kräfte möglichst gleichmäßig an den Schneiden angreifen. Außerdem können sich ggf. durch die rotationssymmetrische Anordnung der Schneiden in Radialrichtung auftretende Passivkräfte weitestgehend aufheben.

Weiter vorzugsweise verjüngen sich die schneidenartigen Vorsprünge bzw. Schneiden in der Höhe vom Schaft zum Schraubenkopfrand hin und/oder sie erstrecken bis an den Schraubenkopfrand heran. Die Höhe der schneidenartigen Vorsprünge kann ggf. an den Plattenwerkstoff angepaßt werden. Da Schiefermaterial zermahlen bzw. ausgebrochen werden kann, reichen für die Befestigung der vergleichsweise dünnen Schieferplatten Höhen unterhalb eines Millimeters aus. Die schneidenartigen Vorsprünge bzw. Schneiden können eine steilere in Einschraubrichtung weisende Schneidseite und eine flachere in Gegenrichtung weisende Rückseite aufweisen, um den Einsenkeffekt zu verstärken. Weiter sind sie vorzugsweise geradlinig ausgebildet und liegen in Ebenen, die als Sekanten durch den Schaft laufen. Die Anordnung der schneidenartigen Vorsprünge bzw. Schneiden weicht mithin von Radiallinien ab. Vorzugsweise schließen sie mit einer durch die Schneide bzw. Schneidseite am Schraubenkopfrand gehenden Radiallinie einen Winkel von etwa 5-25° ein.

Der Schraubstift sollte, um mit einem motorbetriebenen Schraubgerät als Schieferplatten-Befestigungsmittel verwendbar zu sein, mit einem Rundkopf mit einem Mindestdurchmesser von 8,5 mm ausgebildet sein, wobei der Rundkopf eine Aussparung für den formschlüssigen Eingriff einer Werkzeugspitze des Schraubgerätes aufweist. Durch die Ausbildung des Kopfes als Rundkopf wird die Verarbeitung mit motorbetriebenen Schraubgeräten auch bei der Schieferplatten-Dacheindeckung ermöglicht. Um eine Führung des Befestigungsmittels im oder am Schraubgerät zu ermöglichen und trotzdem eine ausreichende, Sicherheit gewährende Befestigung der Schieferplatten z.B. an der Unterkonstruktion aus Holz zu gewährleisten, weist der Rundkopf zweckmäßig einen der Sollbestimmung der Fachregeln angepaßten Mindestdurchmesser von 8,5 mm auf. Vorzugsweise hat der Rundkopf einen Nenndurchmesser von etwa 8,8 mm, dem als Toleranzfeld eine Untertoleranz von 0,2 mm für fertigungsbedingte Schwankungen zugeordnet ist, so daß der Kopfdurchmesser mindestens 8,6 mm und maximal 8,8 mm beträgt.

Vorzugsweise ist hierbei vorgesehen, daß das Schraubgerät ein Elektro- oder Akkuschrauber oder eine Bohrmaschine mit einem geeigneten Aufsatz zum Einschrauben von Schrauben ist. Das Schraubgerät kann auch zusätzlich mit einer Impulseinrichtung versehen sein.

Vorzugsweise hat der Schaft einen Schaftabschnitt mit konstantem Schaftdurchmesser und der Schaftabschnitt schließt sich unmittelbar an den sich konisch bzw. kegelig erweiternden, die Senkkopfoberfläche bildenden Schaftbereich an. Der Schaftbereich weist vorzugsweise einen Konusnennwinkel von 90° mit einer Toleranzabweichung von 2° auf. Der Schaft hat hierbei am Übergang zum Rundkopf vorzugsweise exakt den Nenndurchmesser. Da Schieferplatten häufig eine Dicke von 3 mm bis 8 mm haben, kann sich der konische Schaftbereich über eine Schaftlänge von etwa 2 mm bis 4 mm, vorzugsweise 3 mm erstrecken. Ferner wird bevorzugt, wenn die Schaftspitze, die zuerst in ein anderes Material eindringen muß, einen Nennwinkel von etwa 28° mit einer Toleranzabweichung von 3° aufweist.

Den weiteren Anforderungen der Fachregeln für Dach- bzw. Fassadeneindeckung wird dadurch genügt, daß der sich an die Schaftspitze unmittelbar anschließende Abschnitt des Schaftes mit einer Schraubwendel versehen ist, deren Außendurchmesser vorzugsweise 3,6 mm bis 4 mm, insbesondere 3,8 mm beträgt. Die Schraubwendel kann die vorgeschriebenen Auszugskräfte aufnehmen.

Die Aussparung im Rundkopf ist vorzugsweise als Kreuzschlitz, Torx oder Philips ausgeführt. Der Rundkopf kann vorzugsweise eine Dicke zwischen etwa 0,5 mm und 1 mm aufweisen. Die besondere Ausbildung als Schieferplatten-Befestigungsmittel zeigt sich auch in der Schaftlänge von gleich oder mehr als 32 mm. Die Schaftlänge kann insbesondere 32 mm, 35 mm oder 50 mm betragen. Ferner besteht das Schieferplatten-Befestigungsmittel vorzugsweise aus Kupfer, Edelstahl (V2A; V4A) oder/und nicht-rostendem Stahl oder es ist feuerverzinkt mit einer Mindestzinkauflage von 50 µm. Weiter vorzugsweise ist die Schraube in Coil- oder Streifenmagazinen magazinierbar und das Schraubgerät ist mit einem Magazin oder einer Schraubenzuführeinrichtung versehen.

Weitere Vorteile und Ausgestaltungen der Erfindung ergeben sich aus der nachfolgenden Beschreibung eines in der Zeichnung gezeigten Schraubstiftes. Die Beschreibung erfolgt für die bevorzugte Verwendung des Schraubstiftes als Schieferplatten-Befestigungsmittel. In der Zeichnung zeigen:
- **Fig. 1**: das erfindungsgemäße Schieferplatten-Befestigungsmittel in Seitenansicht;
- **Fig. 2**: eine Ansicht des Schieferplatten-Befestigungsmittels in Draufsicht auf den Rundkopf;
- **Fig. 3**: eine Schnittansicht entlang III-III in Fig. 1; und
- **Fig. 4**: eine schematische Schnittansicht windschief zur Senkkopfoberfläche entlang IV-IV in Fig. 3.

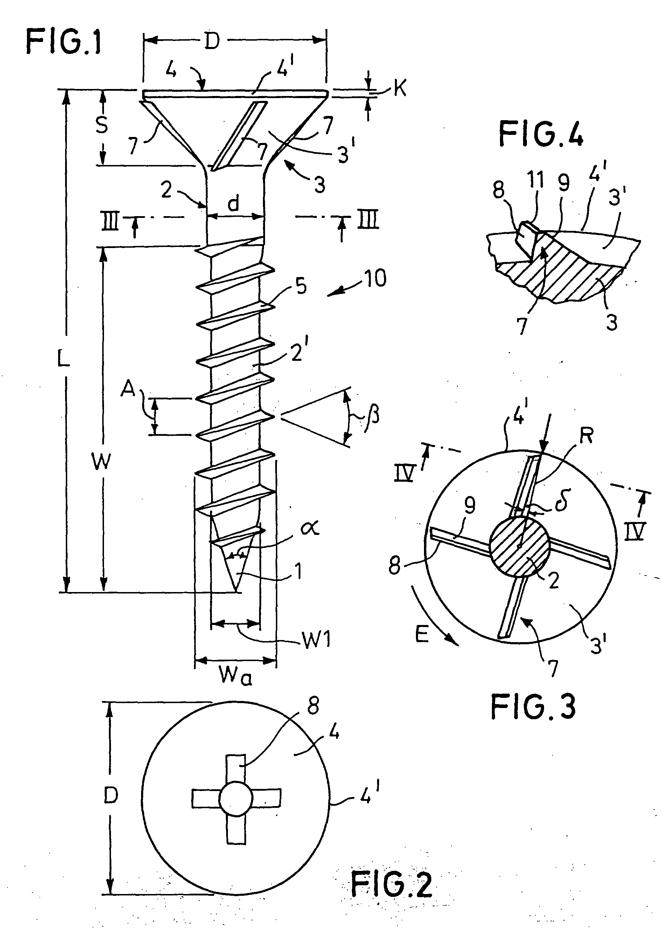

In Fig. 1 ist ein insgesamt mit 10 bezeichnetes Schieferplatten-Befestigungsmittel dargestellt, das mit einem nicht gezeigten motorbetriebenen Elektro- oder Akkuschrauber verarbeitet werden kann. Das Schieferplatten-Befestigungsmittel 10 ist ein einstükkiges, vorzugsweise maschinell hergestelltes Bauteil und weist eine Schaftspitze 1, einen mehrere Zentimeter langen Schaft 2, einen relativ kurzen, sich erweiternden Schaftbereich 3 sowie einen kreisrunden Rundkopf 4 auf. Die Schaftspitze 1 bildet das in Ansicht untere Ende des Schaftes 2, während der Rundkopf 4 an dem oberen Schaftende angeordnet bzw. ausgebildet ist. Der Schaft 2 weist einen Schaftabschnitt 2' mit einer Schraubwendel 5 auf, die die Auszugskraft des Schieferplatten-Befestigungsmittels 10 bestimmt. Die Schaftspitze 1 ist kegelförmig und weist einen spitzen Nennwinkel von 25° bis 34° auf, vorzugsweise 28° ± 3°.

Damit das Schieferplatten-Befestigungsmittel mit den nicht gezeigten Schraubgeräten verarbeitet werden kann, z.B. um bei der Dach- oder Fassadeneindeckung in die Holzschalung/Holzlattung (nicht gezeigt) durch Schieferplatten (nicht gezeigt) hindurch eingeschraubt zu werden, ist der Rundkopf 4 mit einem Nenndurchmesser D von 8,8 mm versehen. Ein Nenndurchmesser von 8,8 mm wird trotz der Sollanforderung in den Fachregeln für die Dacheindeckung als ausreichend für die sichere Befestigung von Schieferplatten angesehen. Für die Verarbeitung mit den Schraubgeräten ist vorteilhaft wenn die Abweichungen des Rundkopfes 4 von einer kreisrunden Form nicht außerhalb eines Toleranzfeldes T liegen, das bei der beschriebenen Ausführungsform einer Untertoleranzgröße von 0,2 mm entspricht. Entsprechende Kopfdurchmesser von 8,6 mm bis 8,8 mm bieten für die Verarbeitung mit Schraubgeräten kompatible Abmaße.

Ein weiteres, für die Ausbildung des dargestellten Schieferplatten-Befestigungsmittels wichtiges Merkmal ist die Ausbildung als Senkkopfschraube mit der konischen Erweiterung im Schaftbereich 3. Der kegelige Schaftbereich 3 erstreckt sich über eine relativ kurze Schaftbereichlänge S von etwa 3 mm bei einer Gesamt-Schaftlänge L von hier 35 mm. Der den Senkkopf ausbildende Schaftbereich 3 hat eine Oberfläche 3', die im folgenden als Senkkopfoberfäche 3' bezeichnet wird. Der Kopf 4 schließt bündig an den Schaftbereich 3 an und kann an der dem Schaft 2 abgewandten Seite gerundet sein. Die Kopfdicke K beträgt nur etwa 0,2-0,5 mm. Der unmittelbare Übergang des Kopfes 4 in die Senkkopfoberfläche 3' ist insbesondere für die Magazinierung der Befestigungsmittel 10 in Streifenmagazinen günstig, da sich das Befestigungsmittel 10 dann z.B. von dem Plastikstreifen gut lösen kann. Im Befestigungszustand befindet sich der sich erweiternde Schaftbereich (Senkkopf) 3 vollständig innerhalb des Befestigungsloches in der Schieferplatte, so daß der Schaftbereich 3 unmittelbar gegen das Schiefermaterial der Schieferplatte drückt. Die Schraubwendel 5 erstreckt sich über eine Wendellänge W, die im gezeigten Ausführungsbeispiel eines Schraubmittels mit der Gesamtlänge L von 35 mm etwa 30 mm beträgt. Die Schraubwendel 5 hat einen Außendurchmesser Wa von 3,6 mm bis 4 mm (hier 3,8 mm), wobei der Schaft 2' im Bereich der Wendel 5 einen konstanten Durchmesser Wi von etwa 2,4 mm bis 2,6 mm hat. Der Abstand A zwischen einzelnen Wendeln der Schraubwendel 5 kann vorzugsweise etwa 1,8 mm betragen und der Winkel β beträgt im gezeigten Ausführungsbeispiel 40°. In Abhängigkeit der verwendeten Schalung können jedoch auch andere, insbesondere höhere Schraubwendelsteigungen Anwendung finden.

Wie Fig. 2 zeigt, ist im Kopf 4 des Befestigungsmittels 10 eine Aussparung 8 vorgesehen, die im gezeigten Ausführungsbeispiel als Kreuzschlitz für ein entsprechend passendes Werkzeug am vorzugsweise motorbetriebenen Schraubgerät ausgeführt ist. Die Aussparung kann auch als Torx oder Philips u.dgl. ausgeführt sein. Es versteht sich für den Fachmann, daß das erfindungsgemäße Befestigungsmittel auch mit einem Handschraubendreher verarbeitet werden kann. Ferner ist das Schieferplatten-Befestigungsmittel für die Verarbeitung mit Schraubgeräten vorzugsweise in ein Coil- oder Streifenmagazin einsortiert.

Die Fig. 1, 3 und 4 zeigen, daß der Senkkopf bzw. Schaftbereich 3 auf der Senkkopfoberfläche 3' mit mehreren, rotationssymmetrisch über den Umfang verteilten Schneiden 7 versehen ist. Diese Schneiden 7 sind integraler Bestandteil der Senkkopfoberfläche 3' und reichen vom Senkkopfschraubenrand 4' bis an den Schaft 2 heran. Jede Schneide 7 ist am Schaft 2 etwas höher ausgebildet als am Schraubenkopfrand 4', wobei die maximale Höhe beispielsweise etwa 0,5 mm und die minimale Höhe am Schraubenkopfrand 4' etwa 0,3 mm betragen kann. Zum Schraubenkopfrand 4' hin sind die Schneiden vorzugsweise abgerundet. Insbesondere Fig. 4 zeigt, daß jede Schneide 7 eine in Einschraubrichtung E (Fig. 3) weisende Schneidseite 8 und eine in Gegenrichtung weisende Rückseite 9 aufweist, wobei die Einschraubrichtung von der Steigung der Schraubwendel 5 vorgegeben ist. Die Schneidseite 8, die das überschüssige oder überstehende Schiefermaterial beim Einschrauben auf der letzten Umdrehung wegnimmt, kann eine Neigung von etwa 60-90° zur Senkkopfschraubenoberfläche 3' haben, während die Rückseite 9 um etwa 30-60° geneigt sein kann. Auch andere Neigungen sind durchaus möglich. Zwischen der Schneidseite 8 und der Rückseite 9 läuft die vorzugsweise geradlinig ausgebildete Schneidkante 11. Wie insbesondere die Fig. 1 und 3 erkennen lassen, sind die Schneiden 7 um einen Winkel δ zu Radiallinien R geneigt, d.h. die Schneiden 7 liegen in Ebenen, die den Schaft 2 als Sekanten schneiden würden. Der Winkel δ zwischen einer Radiallinie R und der Schneidkante 11 bzw. den Grenzlinien der Schneidseite 8 oder Rückseite 9 beträgt etwa 5-25°.

Für den Fachmann ist ersichtlich, daß der erfindungsgemäße Schraubstift nicht nur bei Schieferplatten, sondern auch bei anderen Materialien, insbesondere plattenförmigen Materialien für die Dach- und Fassadendeckung einsetzbar ist. Abweichend von der dargestellten Ausführungsform mit vier relativ stark ausgeprägten Schneiden können am Senkkopf auch eine kleinere oder größere Anzahl von Schneiden bzw. flügelartigen Vorsprüngen ausgebildet sein. Für den erfindungsgemäßen Einsenkeffekt reicht es ggf. aus, daß die Schneiden als Rippen oder Kanten auf der Senkkopfoberfläche ausgebildet sind. Solche und andere Abweichungen sollen in den Schutzbereich der anhängenden Schutzansprüche fallen.

## Patentansprüche

1. Schraubstift insbesondere zur Befestigung von Dach- oder Fassadenplatten aus Schiefer, Naturstein, Faserzement od.dgl. an einer Deckunterlage, Schalung, Unterkonstruktion aus Holz, und/oder einem Mauerwerk, mit einem Schaft (2), dessen eines Ende als Schaftspitze (1) ausgebildet ist, dessen anderes Ende mit einem Kopf (4) versehen ist und der in einem sich an die Schaftspitze (1) anschließenden Abschnitt (2') mit einer Schraubwendel (5) versehen ist, **dadurch gekennzeichnet, daß** der Schraubstift als Senkkopfschraube ausgebildet ist und auf der kegeligen oder konischen Senkkopfoberfläche (3') wenigstens ein sich vom Schaft (2) nach außen erstreckender schneidenartiger Vorsprung oder eine Schneide (7) ausgebildet ist.

2. Schraubstift nach Anspruch 1, **dadurch gekennzeichnet, daß** mehrere, insbesondere drei bis fünf schneidenartige Vorsprünge bzw. Schneiden (7) rotationssymmetrisch um die Schraubenachse verteilt auf der Senkkopfoberfläche (3') angeordnet sind.

3. Schraubstift nach Anspruch 1 oder 2, **dadurch gekennzeichnet, daß** die schneidenartigen Vorsprünge bzw. Schneiden (7) sich in der Höhe vom Schaft (2) zum Schraubenkopfrand (4') hin verjüngen und/oder sich bis an den Schraubenkopfrand (4') heran erstrecken.

4. Schraubstift nach einem der Ansprüche 1 bis 3, **dadurch gekennzeichnet, daß** die schneidenartigen Vorsprünge bzw. Schneiden (7) eine steilere in Einschraubrichtung (E) weisende Schneidseite (8) und eine flachere in Gegenrichtung weisende Rückseite (9) aufweisen.

5. Schraubstift nach einem der Ansprüche 1 bis 4, **dadurch gekennzeichnet, daß** die schneidenartigen Vorsprünge bzw. Schneiden (7) geradlinig ausgebildet sind und in Ebenen liegen, die als Sekanten durch den Schaft (2) laufen.

6. Schraubstift nach einem der Ansprüche 1 bis 5, **dadurch gekennzeichnet, daß** die Schneide (7) bzw. Schneidkante (11) mit einer diese am Schraubenkopfrand (4') schneidenden Radiallinie (R) einen Winkel (δ) von 5-25° einschließt.

7. Schraubstift nach einem der Ansprüche 1 bis 6, **dadurch gekennzeichnet, daß** der Schraubstift mit einem motorbetriebenen Schraubgerät verarbeitbar ist, der Kopf ein Rundkopf (4) mit einem Mindestdurchmesser von 8,5 mm ist und der Rundkopf (4) eine Aussparung (8) für den formschlüssigen Eingriff einer Werkzeugspitze des Schraubgerätes aufweist.

8. Schraubstift nach Anspruch 7, **dadurch gekennzeichnet, daß** der Rundkopf (4) einen Nenndurchmesser (D) mit einem vorgegebenen Toleranzfeld (T) aufweist, wobei vorzugsweise der Nenndurchmesser (D) etwa 8,8 mm und das Toleranzfeld (T) für fertigungsbedingte Schwankungen eine Untertoleranz von 0,2 mm vorgibt.

9. Schraubstift nach Anspruch 7 oder 8, **dadurch gekennzeichnet, daß** das Schraubgerät ein Elektro- oder Akkuschrauber oder eine Bohrmaschine mit einem Aufsatz zum Einschrauben von Schrauben ist, wobei vorzugsweise die Schraube (10) in Coil- oder Streifenmagazinen magazinierbar ist und das Schraubgerät mit einem Magazin und/oder einer Schraubenzuführeinrichtung versehen ist.

10. Schraubstift nach einem der Ansprüche 1 bis 9, **dadurch gekennzeichnet, daß** der Schaft (2) einen Schaftabschnitt mit konstantem Schaftdurchmesser (d) von vorzugsweise 3 mm aufweist und mit dem sich konisch erweiternden, die Senkkopfoberfläche (3') bildenden Schaftbereich (3) an den Rundkopf (4) angeschlossen ist, wobei der Schaftbereich (3) vorzugsweise einen Konusnennwinkel (γ) von 90° mit einer Toleranzabweichung von 2° aufweist.

11. Schieferplatten-Befestigungsmittel nach einem der Ansprüche 1 bis 10, **dadurch gekennzeichnet, daß** der Schaftbereich (3) am Übergang zum Kopf (4) den Nenndurchmesser (D) hat und/oder sich über eine Schaftbereichslänge (S) von 2 mm bis 4 mm, vorzugsweise 3 mm erstreckt.

12. Schraubstift nach einem der Ansprüche 1 bis 11, **dadurch gekennzeichnet, daß** die Schaftspitze (1) einen Nennwinkel (α) an der Schaftspitze (1) von 28° mit einer Toleranzabweichung von 3° oder einen Nennwinkel (α) von 34° aufweist und/oder die Schraubwendel (5) einen Außendurchmesser (Wa) von vorzugsweise 3,6 mm bis 4 mm, insbesondere 3,8 mm aufweist.

13. Schraubstift nach einem der Ansprüche 1 bis 12, **dadurch gekennzeichnet, daß** die Aussparung (8) als Kreuzschlitz, Torx oder Philips ausgeführt ist und/oder die Schraube eine Schaftlänge (L) von 32 mm, 35 mm oder 50 mm hat.

14. Schraubstift nach einem der Ansprüche 1 bis 13, **dadurch gekennzeichnet, daß** er aus Kupfer oder Edelstahl besteht und/oder feuerfest mit einer Mindestzinkauflage von 50 µm verzinkt ist und/oder ein Schieferplatten-Befestigungsmittel, insbesondere ein Schiefer-Schraubstift bzw. eine Schieferschraube ist.
